# EUROPÄISCHE PATENTSCHRIFT

(11) **EP 0 502 867 B1**
(45) Veröffentlichungstag und Bekanntmachung des Hinweises auf die Patenterteilung: **06.04.1994**
(21) Anmeldenummer: 90916697.7
(22) Anmeldetag: 26.11.1990
(51) Int. Cl.: G01B 17/00

(54) **Verfahren und Vorrichtung zur Abstandsmessung in Gasen und Flüssigkeiten mittels Ultraschall**
Process and device for the measurement of distances in gases and liquids using ultrasonics
Procédé et dispositif pour la mesure de distance dans les gaz et les liquides par ultrasons

(30) Priorität: 28.11.1989 DE 3939328
(43) Veröffentlichungstag der Anmeldung: 16.09.1992
(73) Patentinhaber: Weidmüller Interface GmbH & Co., D-32760 Detmold (DE)
(72) Erfinder: VOGT, Göran, D-3006 Wettmar (DE)
(74) Vertreter: Bauer, Wulf, Dr.
(86) Internationale Anmeldenummer: DE9000910
(87) Internationale Veröffentlichungsnummer: WO9108440

(56) Entgegenhaltungen:
- EP-A- 0 037 196
- EP-A- 0 118 711
- DE-A- 2 036 613
- DE-A- 3 608 384
- DE-A- 3 621 819

## Beschreibung

Die Erfindung bezieht sich auf ein Verfahren nach dem Oberbegriff des Anspruchs 1 sowie eine nach diesem Verfahren arbeitende Vorrichtung.

Bei Abstandsmessungen mittels Ultraschall ist die Genauigkeit der Abstandsbestimmung entscheidend abhängig von der präzisen Kenntnis der Schallgeschwindigkeit und der exakten Laufzeit eines Schallimpulses. Grundsätzlich können durch Messung mittels Ultraschall sehr präzise Abstandsmessungen durchgeführt werden, mit den Vorrichtungen nach dem Stand der Technik läßt sich jedoch die prinzipiell erreichbare Genauigkeit nicht ausschöpfen, weil Schallgeschwindigkeit und/oder Impulslaufzeit mit Fehlern erfapt werden.

Bei dem Verfahren und der nach diesem Verfahren arbeitenden Vorrichtung der eingangs genannten Art (DE-OS 36 21 819) wird entlang der Laufstrecke des Schalls eine zeitlich konstante Luftströmung aufrecht erhalten, hierdurch können Unregelmäßigkeiten der Schallausbreitung entlang der Laufstrecke vermieden werden. Dabei wird die Qualität der Laufstrecke des Schallimpulses aktiv beeinflußt und vorbereitet, damit unter den jeweiligen Meßbedingungen eine möglichst homogene, zeitkonstante Schallfortpflanzung sicher gestellt ist. Hierdurch wird die Meßgenauigkeit entscheidend verbessert.

Die Schallgeschwindigkeit wird bei dem vorbekannten Verfahren durch Messen der Impulslaufzeit zwischen dem Gebersensor und einem Hilfsreflektor ermittelt. Dieses Verfahren führt jedoch nicht zu exakten Ergebnissen, weil die zugrunde gelegte Voraussetzung, daß der den Schwinger ansteuernde Sendeimpuls und die entstehende Schallwelle absolut phasenkonstant zueinander sind, in der Praxis nicht erfüllt ist. Vielmehr hat sich anhand vielfältiger Messungen gezeigt, daß die Phasenbeziehung zwischen dem elektrischen Sendeimpuls und der abgege- benen Schallwelle sowohl temperaturabhängig ist als auch von der Einschaltzeit beeinflußt wird. Im allgemeinen verschiebt sich nach Einschalten einer Vorrichtung der eingangs genannten Art die Phase bis zu einem gewissen Betrag und bleibt nach einer Einlaufzeit des Gerätes im wesentlichen konstant. Welche Verhältnisse im Zeitpunkt einer bestimmten Messung vorliegen, wird jedoch bei dem vorbekannten Verfahren nicht geprüft.

Darüberhinaus ist aus dem Stand der Technik eine Temperaturkompensation und damit Ermittlung der Schallgeschwindigkeit unter Zuhilfenahme eines zweiten Sensors bekannt. Diese Art der Kompensation ist praktisch gleich mit dem oben genannten Verfahren, jedoch lassen sich kleinere Baugrößen des das Objekt erfassenden Sensors realisieren. Nachteilig an der getrennten Anordnung ist, daß die Umgebungstemperaturen beider Sensoren gleich sein müssen und daß nun sogar zwei Geber einen Einfluß auf das Meßergebnis haben. Ungünstig ist zudem, daß zwei Verstärker oder ein Multiplexer notwendig sind und Temperaturänderungen nur mit einer gewissen Verzögerungszeit erfaßt werden.

Schließlich ist eine Temperaturkompensation mittels eines Temperaturfühlers vorbekannt. Diese Art der Temperaturkompensation ist zweifellos einfach und preiswert, da ein separater Hilfsreflektor, der einen genauen Abstand zum Sensor aufweisen muß, entfällt. Die Genauigkeit der gemessenen Entfernung liegt aber nur knapp unter der Ein-Millimeter-Grenze, da temperaturabhängige elektromechanische Kenndaten des Sensors nicht kompensiert werden können und auperdem Temperaturänderungen wegen der Trägheit des Meßwertaufnehmers nicht ausreichend rasch erfaßbar sind.

Aus der EP-A-37 196 und der EP-A-118 711 sind Maßnahmen zur Temperatur- und Driftkompensation bei Ultraschall-Wegmessern bekannt. es werden jeweils zusätzliche Ultraschall-Sender vorgesehen, mit deren Hilfe ein Differenz-Referenzsignal erzeugt wird.

Ausgehend von dem Verfahren und der nach diesem Verfahren arbeitenden Vorrichtung der eingangs genannten Art liegt der Erfindung die Aufgabe zugrunde, die Nachteile dieses Verfahrens bzw. der Vorrichtung zu vermeiden und Verfahren und Vorrichtung dahingehend weiterzuentwickeln, daß eine präzisere Abstandsmessung in flüssigen oder gasförmigen Medien unabhängig von der Einschaltdauer und den physikalischen Eigenschaften des Sensors erreicht wird.

Verfahrensmäßig wird diese Aufgabe mit dem Verfahren nach Anspruch 1 gelöst, bei dem im vorgegebenen, bekannten Abstand zum ersten Hilfsreflektor ein zweiter Hilfsreflektor angeordnet wird, der zeitliche Abstand der Echos von den beiden Hilfsreflektoren erfaßt und mittels des bekannten Abstandes der Hilfsreflektoren voneinander hieraus die Schallgeschwindigkeit ermittelt wird, und der so erhaltene Wert der Schallgeschwindigkeit zur Berechnung des Abstandes des Objekts eingesetzt wird.

Erfindungsgemäß wird als Referenzstrecke also nicht mehr der Abstand zwischen Sensor und einem Hilfsreflektor eingesetzt, vielmehr werden zwei Hilfsreflektoren benutzt, deren Abstand so präzise wie möglich einerseits bekannt und andererseits eingehalten wird (was durch eine ausreichend solide mechanische Konstruktion erreicht wird). Dadurch läßt sich die Schallaufzeit zwischen den beiden Hilfsreflektoren unabhängig von der Phasenbeziehung zwischen dem elektrischen Sendeimpuls und dem tatsächlich abgestrahlten Schallimpuls erfassen. Da zudem die von den beiden Hilfsreflektoren stammenden Echos weitgehend übereinstimmen (ähnlich sind), läßt sich der Ein- und Ausschaltpunkt der elektronischen Zeitmessung besser als bei den vorbekannten Verfahren definieren, so daß auch in dieser Hinsicht die Zeiterfassung verbessert wird.

Als sehr vorteilhaft hat es sich herausgestellt, in einer Weiterbildung die Schallaufzeit zwischen dem Objekt und einem der Hilfsreflektoren zu messen und aus dem dabei erhaltenen Wert und der zwischen den beiden Hilfsreflektoren ermittelten Schallgeschwindigkeit die Entfernung des Objekts von dem Hilfsreflektor zu bestimmen. Auf diese Weise wird auch die Abstandsmessung zum Objekt präziser, da sie nun nicht mehr von der Phasenbeziehung zwischen elektrischem Sendeimpuls und akustisch abgegebenem Impuls abhängt und wiederum der Vorteil vorliegt, daß die Impulslaufzeit aus zwei im wesentlichen gleichartigen akustischen Signalen abgeleitet wird. Die Erfindung ermöglicht es, die Abstandsmessung weitgehend von den speziellen Eigenschaften und dem temporären Zustand des Sensors zu entkoppeln. Hierdurch wird die Meßgenauigkeit deutlich verbessert.

In einer Weiterbildung hat sich die Kombination mit dem ansich bekannten Verfahren, entlang der Laufstrecke des Schalls eine zeitlich konstante Gas- bzw. Flüssigkeitsströmung aufrecht zu erhalten, besonders bewährt. Durch die ansich bekannte Homogenisierung der Meßstrecke, in der sich auch die beiden Hilfsreflektoren befinden, werden präzise Voraussetzungen für die Abstandsmessung geschaffen.

Es sei hier noch erwähnt, daß selbstverständlich aus den Abstandsmeßwerten mittels mathematischer Funktionen auch Dicken-, Durchmesser-, Qualitätsmessungen und andere Messungen durchgeführt werden können.

Verfahrensmäßig hat es sich schlieplich als vorteilhaft erwiesen, den Abstand zwischen den beiden Hilfsreflektoren so groß wie möglich auszubilden. Dadurch wird die Referenzstrecke einerseits möglichst groß, wodurch eine präzisere Messung möglich ist, andererseits stimmt sie mit einem möglichst gropen Teil der Meßstrecke zum Objekt überein, so daß sich irgendwelche zufälligen Abweichungen herausmitteln. Da bei jedem einzelnen "Schuß" sowohl die Schallgeschwindigkeit als auch der Abstand zum Objekt erfaßt wird, liegt die jeweils aktuelle Schallgeschwindigkeit der tatsächlichen Meßstrecke zum Objekt mit umso größerer Genauigkeit vor, je weitgehender die Referenzstrecke zwischen den beiden Hilfsreflektoren und die Meßstrecke zwischen dem vorderen Hilfsreflektor und dem Objekt übereinstimmen.

Vorrichtungsmäßig wird die gestellte Aufgabe ausgehend von einer Vorrichtung zur Abstandsmessung mittels Ultraschall, die einen Meßkopf, der einen sendenden und vorzugsweise auch empfangenden Ultraschallsensor und eine Austrittsöffnung für die Ultraschallsignale hat und einen im Schallweg angeordneten Hilfsreflektor aufweist, dadurch gelöst, daß im Schallweg ein zweiter Hilfsreflektor vorgesehen ist, der im vorgegebenen, zeitlich konstanten Abstand vom ersten Hilfsreflektor angeordnet ist.

Durch diese Vorrichtung werden die bereits zum Verfahren erwähnten Vorteile erreicht. In einer Weiterbildung wird vorgeschlagen, die beiden Hilfsreflektoren möglichst gleichartig auszubilden. Hierdurch stimmen die von ihnen reflektierten Echosignale weitgehend überein, so daß eine präzise Messung möglich ist.

Weitere Vorteile und Merkmale der Erfindung ergeben sich aus der nun folgenden Beschreibung eines nicht einschränkend zu verstehenden Ausführungsbeispiels, das unter Bezugnahme auf die Zeichnung näher erläutert wird. In dieser zeigen:
- Fig. 1: ein Schnittbild durch einen Meßkopf und ein reflektierendes Objekt sowie zwei Hilfsreflektoren, zur Erläuterung des Verfahrens und der Vorrichtung und
- Fig. 2: ein Impulsdiagramm für den Ablauf einer Messung.

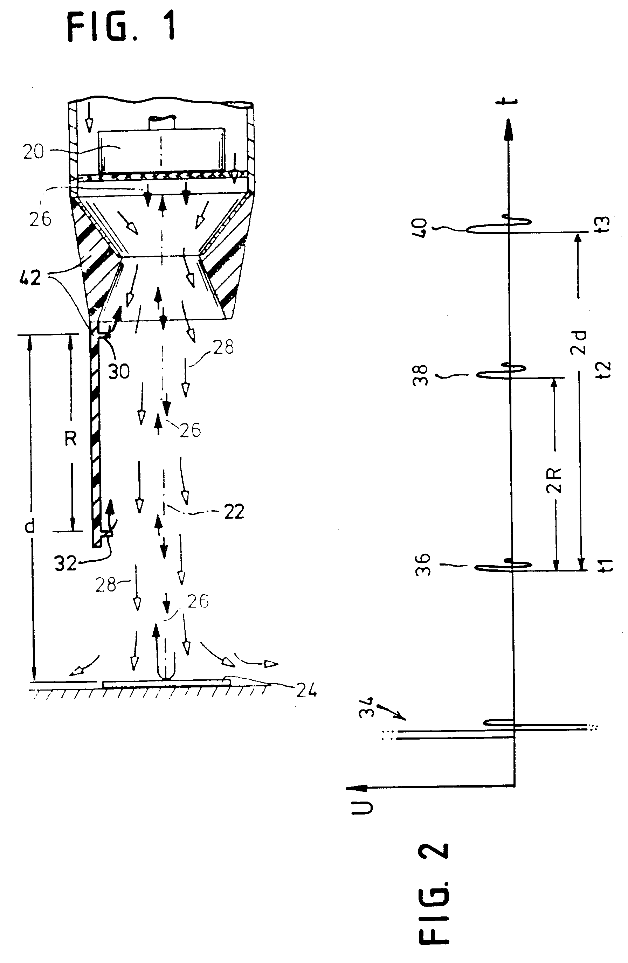

Bei der Ultraschall-Abstandsmessung wird ein im gezeigten Ausführungsbeispiel sendender und empfangender Sensor 20 mit einem elektrischen Sendeimpuls beaufschlagt, der in einen akustischen Schallimpuls umgesetzt wird. Dieser breitet sich entlang einer Ausbreitungsrichtung 22 aus, in Figur 1 nach unten, und gelangt auf ein Objekt 24. Dort wird ein Teil des Schallimpulses in Richtung der Ausbreitungsrichtung 22 reflektiert und gelangt wieder in den Sensor 20, der nach Senden des Schallimpulses nunmehr als empfangender Sensor benutzt wird. Die Ausbreitung des Schalls ist durch Pfeile 26 angedeutet.

Entlang der Laufstrecke des Schallimpulses wird in ansich bekannter Weise eine Luftströmung (in einer anderen Alternative: eine Flüssigkeitsströmung) aufrecht erhalten, um Unregelmäßigkeiten der Schallausbreitung entlang der Laufstrecke, also in Ausbreitungsrichtung 22, zu vermindern. In der gezeigten Ausführung (Fig. 1) strömt ein Luftstrahl, der durch die Pfeile 28 angedeutet ist, in Ausbreitungsrichtung 22 und schafft für den Schall 26 einen vorgegebenen, wohldefinierten Ausbreitungsweg, auf dem die Schallgeschwindigkeit konstant ist. Da der Luftstrahl sich zeitlich nicht ändert, vielmehr konstant gehalten wird, bleibt die Schallgeschwindigkeit in Ausbreitungsrichtung 22 ebenfalls konstant, jedenfalls während der Dauer einer Messung, so daß definierte Verhältnisse vorliegen. Zu den konstruktiven Einzelheiten über die Herstellung einer Luftströmung wird auf den Offenbarungsgehalt der DE-OS 36 21 819 verwiesen.

In Ausbreitungsrichtung 22 befinden sich vor dem Sensor 20 ein erster und ein zweiter Hilfsreflektor 30, 32. Sie sind gleich und in einem festen Abstand R mechanisch dauerhaft und präzise voneinander angeordnet. Wie Fig. 1 zeigt, sind beide Hilfsreflektoren 30, 32 identisch aufgebaut, der Abstand R ist von einer glatten, quer zur Ausbreitungsrichtung 22 verlaufenden und zum Sensor 20 gewandten Fläche aus gemessen, wie dies auch Fig. 1 zeigt. Ebenfalls eingezeichnet ist in Fig. 1 der Abstand d zwischen der beschriebenen Vorderfläche des ersten Hilfsreflektors 30 und der Oberfläche des Objekts 24. Dieser Abstand d ist die Meßgröße.

An den beiden Hilfsreflektoren 30, 32 wird ein Teil des Ultraschallimpulses reflektiert, dies ist durch entsprechende Pfeile kenntlich gemacht. Der reflektierte Anteil, der den Sensor 20 erreicht, wird in ein elektrisches Signal umgewandelt. Die einzelnen Signale werden anhand von Fig. 2 erläutert: Mit 34 ist dort das eigentliche Sendesignal bezeichnet, das jedoch erfindungsgemäß keine Rolle spielt, vielmehr ermöglicht es die Erfindung, jegliche Referenz zu diesem Sendesignal auszuschliepen. Dies gibt vorrichtungsmäßig wiederum die Möglichkeit, während der Zeitdauer des Sendesignals den Empfangskanal vollständig zu sperren und ihn erst nach einer Totzeit, die etwas kürzer ist als die noch zu besprechende Zeit t1, zu öffnen.

Als erstes Echo nach Aussendung eines Schallimpulses erreicht der am ersten Hilfsreflektor 30 reflektierte Schallanteil den Sensor 20, er führt zu einem elektrischen Signal 36, das zur Zeit t1 auftritt. Als nächstes trifft der vom zweiten Hilfsreflektor 32 reflektierte Schallanteil im Sensor 20 ein, er führt dort zu einem elektrischen Signal 38, das zum Zeitpunkt t2 auftritt. Zeitlich danach trifft das Echo vom Objekt 24 ein, das zu einem elektrischen Signal 40 führt.

Die Zeitdauer t2 minus t1 ist der doppelte Weg R also die Referenzstrecke, demgemäß ist diese Zeitdauer auch in Fig. 2 mit 2R bezeichnet. Da der Abstand R der beiden Hilfsreflektoren 30, 32 so präzise wie möglich vorgegeben ist, also mechanisch und thermisch stabil ist, kann über die Zeitdauer t2 minus t1 und die Strecke 2R die Schallgeschwindigkeit v errechnet werden. Die so erhaltene Schallgeschwindigkeit wird mit der Zeitdauer t3 minus t1 multipliziert und ergibt den Abstand des Objektes 24 vom ersten Hilfsreflektor 30. Damit ist die Messung abgeschlossen.

Erfindungsgemäß wird also mit ein- und demselben Schallimpuls sowohl die Strecke R ausgemessen und hieraus die jeweilige Schallgeschwindigkeit berechnet als auch die Zeitdauer ermittelt, mit der der Schall die Strecke 2d zurücklegt. Messung und Referenzmessung erfolgen also jeweils gleichzeitig, so daß trägheitsfrei irgendwelche Temperaturunterschiede in der Laufstrecke sich im tatsächlichen Meßergebnis herausmitteln. Weiterhin werden für die Messungen lediglich akustische Echos (und nicht der Sendeimpuls) herangezogen.

Die Referenzstrecke R wird möglichst groß gewählt, je größer sie gewählt ist, umso genauer ist die Temperaturkompensation, und umso präziser wird auch die Meßstrecke d erfapt. Die Strecke 2d - 2R sollte so klein wie möglich sein, die Strecke 2R so groß wie möglich.

Die Ausbildung der Hilfsreflektoren 30, 32 ist ansich beliebig. Als sehr vorteilhaft hat es sich erwiesen, die Hilfsreflektoren in einem Rohrabschnitt eines Austrittsteils anzuordnen. Dabei können die Hilfsreflektoren lokal angeordnete Stege sein oder ringförmig an der Innenwand des Rohrs umlaufen, sie können als Gitter, als Speichen, die bis in die Nähe der Rohrmitte reichen oder dergleichen ausgeführt sein. Grundsätzlich ist die geometrische Ausbildung der Hilfsreflektoren 30, 32 beliebig, bei ihrer Konstruktion muß nur darauf geachtet werden, daß sie mechanisch und thermisch stabil sind.

Aus dem Obenstehenden ergibt sich, daß der Ort, an dem sich der Sensor 20 befindet, für die Messung ohne Bedeutung ist. Entscheidend für die Meßgenauigkeit ist lediglich die Konstanz des Abstandes R der Hilfsreflektoren 30, 32, weil dieser Abstand multipliziert mit dem Verhältnis der Laufzeiten t3 minus tl zu t2 minus tl den Meßabstand d ergibt. Eine besondere Justierung des Sensors 20 innerhalb des Gehäuses des Meßkopfes ist somit nicht erforderlich.

## Patentansprüche

1. Verfahren zur Abstandsmessung in Gasen und Flüssigkeiten mittels Ultraschall, bei dem
- ein Schallimpuls in einem Sensor (20) erzeugt und in dem Gas oder der Flüssigkeit auf ein reflektierendes Objekt (24) sowie einen im Schallweg angeordneten Hilfsreflektor (z. B. 30) gerichtet wird, und die am Objekt (24) und am Hilfsreflektor (z. B. 30) reflektierten Anteile des Schallimpulses wieder empfangen werden und
- über die Schallaufzeit die Objektentfernung ermittelt wird,
dadurch gekennzeichnet,
- daß im vorgegebenen, bekannten Abstand R zum ersten Hilfsreflektor (30) ein zweiter Hilfsreflektor (32) so angeordnet und ausgebildet wird, daß die von den beiden Hilfsreflektoren (30, 32) stammenden reflektierten Anteile des Schallimpulses weitgehend übereinstimmen,
- daß der zweite Hilfsreflektor (32) ebenfalls im Schallweg zwischen Sensor (20) und Objekt (24) angeordnet ist,
- daß der zeitliche Abstand t2 minus t1 der reflektierten Anteile desselben Schallimpulses von den beiden Hilfsreflektoren (30, 32) erfaßt und hieraus mittels des bekannten geometrischen Abstandes R die Schallgeschwindigkeit v ermittelt und der so erhaltene Wert der Schallgeschwindigkeit v zur Berechnung des Abstandes des Objekts (24) eingesetzt wird.

2. Verfahren nach Anspruch 1, dadurch gekennzeichnet, daß entlang der Laufstrecke (Ausbreitungsrichtung 22) des Schalls eine zeitlich konstante Gas- bzw. Flüssigkeitsströmung aufrecht erhalten wird.

3. Verfahren nach Anspruch 1 oder 2, dadurch gekennzeichnet, daß die Schallaufzeit zwischen dem Objekt (24) und einem Hilfsreflektor (z. B. 30) gemessen und aus dem dabei erhaltenen Wert (t2 minus t1) und der zwischen den beiden Hilfsreflektoren (30, 32) ermittelten Schallgeschwindigkeit v die Entfernung d des Objekts (24) von dem einen Hilfsreflektor (30) ermittelt wird.

4. Verfahren nach einem der Ansprüche 1 bis 3, dadurch gekennzeichnet, daß der Abstand zwischen den Hilfsreflektoren (30, 32) soweit wie möglich dem zu erwartenden Meßabstand d angenähert wird.

5. Vorrichtung zur Messung des Abstandes eines reflektierenden Objektes (24) mittels Ultraschall in einem Gas oder einer Flüssigkeit, mit einem Meßkopf, der einen sendenden und vorzugsweise auch empfangenden Ultraschallsensor (20) und ein Gehäuse mit einer Austrittsöffnung für die Ultraschallsignale hat und mit einem im Schallweg zwischen Ultraschallsensor (20) und Objekt (24) angeordneten Hilfsreflektor (30), dadurch gekennzeichnet, daß ein zweiter Hilfsreflektor (32) vorgesehen ist, der im vorgegebenen, bekannten Abstand R vom ersten Hilfsreflektor (30) angeordnet ist, der ebenfalls im Schallweg zwischen Ultraschallsensor (20), Objekt (24) und Schallempfänger angeordnet ist und der so ausgebildet ist, daß die von den beiden Hilfsreflektoren stammenden reflektierten Anteile ein und desselben Schallimpulses weitgehend übereinstimmen.

6. Vorrichtung nach Anspruch 5, dadurch gekennzeichnet, daß im Gehäuse des Meßkopfes eine Einlaßöffnung für Gas oder Flüssigkeit vorgesehen ist und daß gleichachsig zum Schall während der Messung eine zeitlich konstante Gas, bzw. Flüssigkeitsströmung (28) aufrecht erhalten wird.

7. Vorrichtung nach Anspruch 5 oder 6, dadurch gekennzeichnet, daß die beiden Hilfsreflektoren (30, 32) so identisch wie möglich ausgebildet sind.

8. Vorrichtung nach einem der Ansprüche 5 bis 7, dadurch gekennzeichnet, daß die mechanische Verbindung zwischen den beiden Hilfsreflektoren (30, 32) durch ein Material mit möglichst geringer Wärmedehnung realisiert ist bzw. daß das entsprechende Material durch eine Temperiereinrichtung auf konstanter Temperatur gehalten wird.

9. Vorrichtung nach einem der Ansprüche 5 bis 8, dadurch gekennzeichnet, daß ein Austrittsteil (42), an dem die beiden Hilfsreflektoren (30, 32) ausgebildet sind, lösbar mit dem eigentlichen Gehäuse des Meßkopfes verbindbar ist.

10. Vorrichtung nach einem der Ansprüche 1 bis 9, dadurch gekennzeichnet, daß die Hilfsreflektoren (30, 32) in einem Rohrabschnitt eines Austrittsteils angeordnet sind.

## Claims

1. Method of ultrasonic distance measurement in gases and liquids, in which
- a sound pulse is generated in a sensor (20) and is directed in the gas or liquid to a reflecting object (24) and to an auxiliary reflector (e.g., 30) arranged in the path of the sound, and the components of the sound pulse reflected from the object (24) and the auxiliary reflector (e.g., 30) are received again, and
- the distance to the object is determined from the travel time of the sound,
characterized by the fact
- that a second auxiliary reflector (32) is placed at a predetermined, known distance R from the first auxiliary reflector (30) in such a way and is designed in such a way that the components of the sound pulse reflected from the two auxiliary reflectors (30, 32) are largely the same,
- that the second auxiliary reflector (32) is likewise arranged in the path of the sound between the sensor (20) and object (24), and
- that the separation with respect to time of the components of the same sound pulse reflected from the two auxiliary reflectors (30, 32) (t2 minus t1) is determined, this value and the known geometric distance R are used to determine the speed of sound v, and the value of the speed of sound v obtained in this way is used to calculate the distance of the object (24).

2. Method in accordance with Claim 1, characterized by the fact that a gas or liquid stream that is constant with respect to time is maintained along the travel path (direction of propagation 22) of the sound.

3. Method in accordance with Claim 1 or 2, characterized by the fact that the travel time of the sound between the object (24) and an auxiliary reflector (e.g., 30) is measured, and that the value determined in this way (t2 minus t1) and the speed of sound v determined between the two auxiliary reflectors (30, 32) are used to determine the distance d of the object (24) from one of the auxiliary reflectors (30).

4. Method in accordance with any of Claims 1 to 3, characterized by the fact that the distance between the auxiliary reflectors (30, 32) approximates the expected test distance d as closely as possible.

5. Equipment for ultrasonic measurement of the distance of a reflecting object (24) in a gas or liquid, with a measuring head, which has a transmitting and preferably also a receiving ultrasonic sensor (20) and a housing with an outlet opening for the ultrasound signals, and with an auxiliary reflector (30) placed in the path of the sound between the ultrasound sensor (20) and object (24), characterized by the fact that a second auxiliary reflector (32) is provided, which is arranged at a predetermined, known distance R from the first auxiliary reflector (30), is likewise arranged in the path of the sound between the ultrasonic sensor (20), object (24) and sound receiver, and is designed in such a way that the components of one and the same sound pulse reflected from the two auxiliary reflectors are largely the same.

6. Equipment in accordance with Claim 5, characterized by the fact that an intake opening for the gas or liquid is provided in the housing of the measuring head, and that a stream of gas or liquid (28) that is coaxial with the sound and that is constant with respect to time is maintained during the measurement.

7. Equipment in accordance with Claim 5 or 6, characterized by the fact that the two auxiliary reflectors (30, 32) are designed as identically as possible.

8. Equipment in accordance with Claims 5 to 7, characterized by the fact that the mechanical connection between the two auxiliary reflectors (30, 32) is realized with a material with the lowest possible thermal expansion, or that the material is maintained at a constant temperature with a suitable temperature-regulating device.

9. Equipment in accordance with any of Claims 5 to 8, characterized by the fact that a discharge part (42), on which the two auxiliary reflectors (30, 32) are formed, is detachably connected to the actual housing of the measuring head.

10. Equipment in accordance with any of Claims 1 to 9, characterized by the fact that the auxiliary reflectors (30, 32) are arranged in a tube section of an outlet part.

## Revendications

1. Procédé pour la mesure dans le gaz et les liquides par ultrasons où
- une impulsion sonore est produite dans le palpeur (20) et dirigée dans le gaz ou le liquide vers un objet (24) réfléchissant ainsi que vers un réflecteur secondaire (p. ex. 30) placé dans la longueur de parcours des ondes sonores et où les parties de l'impulsion sonore réfléchies sur l'objet (24) et sur réflecteur secondaire (p. ex. 30) sont de nouveau captées et
- où l'éloignement de l'objet est calculé par la durée de parcours du son,
caractérisé en ce
- qu'à la distance prédéterminée connue R vers le premier réflecteur secondaire (30), un deuxième réflecteur secondaire (32) est placé et formé pour que les parties réfléchies de l'impulsion sonore provenant des deux réflecteurs secondaires (30, 32) soient en grande partie concordantes,
- que le deuxième réflecteur secondaire (32) est placé également dans la longueur de parcours des ondes sonores entre le palpeur (20) et l'objet (24),
- que la distance temporelle t2 moins t1 des parties réfléchies de la même impulsion sonore est saisie par les deux réflecteurs secondaires (30, 32) et ainsi à l'aide de la distance géométrique R connue, la vitesse du son v est calculée et la valeur ainsi obtenue de la vitesse du son v est utilisée pour le calcul de la distance de l'objet (24).

2. Procédé selon la revendication 1 caractérisé en ce que le long du parcours (sens de propagation 22) du son, un courant constant au point de vue temps de gaz voire de liquide est maintenu.

3. Procédé selon l'une des revendications 1 ou 2 caractérisé en ce que la durée de parcours du son entre l'objet (24) et un réflecteur secondaire (p. ex. 30) est mesurée et à partir de la valeur ainsi obtenue (t2 moins t1) et de la vitesse du son v calculée entre les deux réflecteurs secondaires (30, 32), l'éloignement d de l'objet (24) par rapport au réflecteur secondaire (30) est calculé.

4. Procédé selon l'une des revendications 1 à 3 caractérisé en ce que la distance entre les réflecteurs secondaires (30, 32) se rapproche le plus possible de la distance mesurée d à prévoir.

5. Dispositif pour la mesure de distance d'un objet réflecteur (24) par ultrasons dans un gaz ou un liquide à l'aide d'une sonde ayant un palpeur-émetteur à ultrasons et de préférence également un palpeur-récepteur à ultrasons (20) et un boîtier avec orifice de sortie pour les signaux ultrasons et à l'aide d'un réflecteur secondaire (30) placé dans la longueur de parcours des ondes sonores entre le palpeur à ultrasons (20) et l'objet (24), caractérisé en ce qu'il est prévu un deuxième réflecteur secondaire (32) placé à une distance déterminée connue R par rapport au premier réflecteur secondaire (30) placé également dans la longueur de parcours des ondes sonores entre le palpeur à ultrasons (20), l'objet (24) et le récepteur sonore et formé afin que les parties réfléchies provenant des deux réflecteurs secondaires concordent en grande partie comme une seule et même impulsion sonore.

6. Dispositif selon la revendication 5 caractérisé en ce que dans le boîtier de la sonde, un orifice d'entrée pour le gaz ou le liquide est prévu et en ce qu'un courant constant au point de vue temps de gaz, voire de liquide est maintenu équiaxement par rapport au son pendant la mesure.

7. Dispositif selon l'une des revendications 5 ou 6 caractérisé en ce que les deux réflecteurs secondaires (30, 32) sont formés de façon aussi identique que possible.

8. Dispositif selon l'une des revendications 5 à 7 caractérisé en ce que la connexion mécanique entre les deux réflecteurs secondaires (30, 32) est réalisée avec un matériau ayant une dilatation thermique minimum voire que le matériau correspondant est tenu à une température constante grâce à un système d'équilibrage de température.

9. Dispositif selon l'une des revendications 5 à 8 caractérisé en ce qu'une partie de sortie (42) à laquelle sont formés les deux réflecteurs secondaires (30, 32) est reliée de façon amovible au boîtier à proprement parler de la sonde.

10. Dispositif selon l'une des revendications 1 à 9 caractérisé en ce que les réflecteurs secondaires (30, 32) sont disposés dans une section de tube d'une partie de sortie.
